# NOUVEAU FASCICULE DE BREVET EUROPEEN

(11) **EP 1 864 846 B2**
(45) Date de publication et mention de la décision concernant l'opposition: **05.04.2017**
(45) Mention de la délivrance du brevet: 28.07.2010
(21) Numéro de dépôt: 07290640.7
(22) Date de dépôt: 16.05.2007
(51) Int. Cl.: B60L 1/00, B60L 1/04, B60L 3/00

(54) **Système et procédé d'alimentation pour un véhicule ferroviaire, convertisseur, unité de pilotage, climatiseur pour ce système**
Stromversorgungssystem und -verfahren für ein Schienenfahrzeug, Wandler, Steuereinheit, Klimaanlage für dieses System
System and method of powering a railway vehicle, converter, control unit, air-conditioner for this system.

(30) Priorité: 09.06.2006 FR 0605135
(43) Date de publication de la demande: 12.12.2007
(73) Titulaire: ALSTOM Transport SA, 92300 Levallois-Perret (FR)
(72) Inventeur: Masselus, Jean-Emmanuel, 6032 Mont-sur-Marchienne (BE)
(74) Mandataire: Lavoix

(56) Documents cités:
- JP-A- 2004 364 412
- US-A- 4 219 071
- US-A- 4 795 859
- 'Beschreibung Vierteiliger Triebzug Baureihe 423 für Deutsche Bahn AG' S-BAHN BR 423 - KURZBESCHREIBUNG 19 Juin 2009, pages 1-30 ;97-114 - 135-139;158-203
- "Leittechnik Pflichtenheft BR423, Funktionsgruppe 3: Hilfsbetriebe" 1997 -1999, Ref.No. 3EGM020001D0016
- H. KURZ, DIPL.-ING. ET AL.: 'ICE T, BR 411, 415 und 605', 2000, HESTRA VERLAG, DARMSTADT pages 7, 52-71 - 107-116
- 'Blessing or curse? Hot Gas Bypass' ENGINEERS NEWSLETTER vol. 32, no. 2, 2003, pages 1 - 4

## Description

L'invention concerne un système et un procédé d'alimentation pour un véhicule ferroviaire, un convertisseur, une unité de pilotage, et un climatiseur pour ce système.

Des véhicules ferroviaires existant sont connu par exemple de JP 2004 3644 12A et comportent :
un premier et un second convertisseurs électriques propre à transformer chacun une tension électrique monophasée ou continue reçue par l'intermédiaire d'une caténaire en de la tension électrique triphasée délivrée sur, respectivement, un premier et un second réseaux d'alimentation triphasée embarqués propres chacun à distribuer, de l'énergie électrique dans plusieurs voitures du véhicule ferroviaire, les premier et second réseaux étant électriquement isolables l'un de l'autre,
plusieurs climatiseurs installés dans plusieurs voitures respectives, chaque climatiseur comportant au moins un compresseur afin de produire de l'air froid expulsé à l'intérieur de la voiture, ce compresseur étant raccordé électriquement au premier réseau pour être alimentés en tension triphasée par le premier convertisseur, et
des charges électriques auxiliaires, autres que les compresseurs, raccordés électriquement au second réseau d'alimentation pour être alimentées en tension triphasée par le second convertisseur.

Les trains classe 423 livrés à DB Regio en 1999 et 2000 comportent un système d'alimentation tel que défini au préambule de la revendication 1.

Le livre « ICE T, BR 411, 415 und 605 » Hestra Verlag, 2000 divulgue également un système d'alimentation selon le préambule de la revendication 1.

Le document « blessing or curse ? Hot Gas Bypass » de engineers newsletter, volume 32, n° 2, 2003 décrit un climatiseur comportant un mécanisme d'ajustement de la température.

On définit par le terme « caténaire » aussi bien un fil conducteur suspendu en l'air le long duquel glisse un pantographe pour alimenter le véhicule ferroviaire, qu'un rail supplémentaire posé sur le sol sur lequel vient s'appuyer un balai afin d'alimenter le véhicule ferroviaire. Cette dernière technologie est connue sous le terme de « troisième rail ».

On appelle ici « air froid » de l'air dont la température est inférieure à la température ambiante à l'intérieur d'une voiture.

Classiquement, pour équilibrer les charges des premier et second convertisseurs, la moitié des compresseurs de climatiseurs est raccordée électriquement au premier convertisseur et l'autre moitié est raccordée au second convertisseur. Pour les mêmes raisons, les charges auxiliaires sont réparties entre le premier et le second convertisseurs.

Puisque les charges auxiliaires nécessitent d'être alimentées par une tension et une fréquence fixe généralement 50 Hz à 60 Hz, chacun des premier et second convertisseurs délivrent sur leur réseau respectif cette tension alternative à fréquence fixe. Dans ces conditions, les compresseurs de chaque climatiseur sont également alimentés par une tension et une fréquence fixes et chaque climatiseur dispose donc d'une même puissance électrique pour alimenter son ou ses compresseur(s) respectif(s).

Dans les climatiseurs modernes, le compresseur absorbe systématiquement la puissance maximale disponible sur le réseau électrique auquel il est raccordé pour pouvoir assurer un grand confort de climatisation aux passagers de la voiture.

Il est donc nécessaire de prévoir dans chaque climatiseur un mécanisme d'ajustement de la température de l'air froid expulsé pour une même puissance électrique maximale disponible sur le premier réseau. Certains mécanismes d'ajustement ne font, en réalité, que détériorer plus ou moins le rendement énergétique du climatiseur. Par exemple, pour une puissance électrique absorbée P par le compresseur, la température de l'air froid sera de X degrés si le rendement énergétique est de Δ et la température de l'air froid sera supérieure à X degrés si le rendement énergétique est plus faible que Δ.

On comprend donc que dans les véhicules ferroviaires existants, la puissance électrique absorbée ou consommée par chaque climatiseur est la même quelles que soient les caractéristiques, (notamment la température et l'hygrométrie), de l'air froid expulsé.

Dans ce contexte, l'invention vise à proposer un véhicule ferroviaire dans lequel la puissance électrique consommée par les climatiseurs peut être réglée.

L'invention a donc pour objet un système d'alimentation pour une véhicule ferroviaire selon la revendication 1.

Ainsi, globalement, la consommation des climatiseurs du train est réduite.

De plus, puisque le premier convertisseur est commun à plusieurs climatiseurs, le système d'alimentation de ces climatiseurs est simplifié et donc moins coûteux qu'un système prévoyant un convertisseur intégré dans chaque climatiseur.

Enfin, le confort des passagers est accru en cas de fonctionnement à faible charge du compresseur par rapport à un climatiseur fonctionnant en tout ou rien, par exemple

Les modes de réalisation de ce système peuvent comporter une ou plusieurs des caractéristiques suivantes :
- un ensemble de contacteurs propre :
   - à raccorder les compresseurs des climatiseurs uniquement au premier convertisseur pour que ces compresseurs soient alimentés à partir de ce premier convertisseur et à raccorder les charges auxiliaires uniquement au second convertisseur pour que les charges auxiliaires soient alimentées à partir de ce second convertisseur, et en alternance
   - à raccorder les compresseurs uniquement au second convertisseur pour que ces compresseurs soient alimentés à partir de ce second convertisseur ;
- un détecteur de défaillance du premier convertisseur, et une unité de manoeuvre de l'ensemble de contacteurs apte à déclencher automatiquement un basculement du raccordement des compresseurs au premier convertisseur vers un raccordement de ces mêmes compresseurs au second convertisseur en réponse à la détection d'une défaillance du premier convertisseur ;
- un ensemble de contacteurs commandables propre :
   - à raccorder les charges électriques auxiliaires uniquement au second convertisseur pour que ces charges soient alimentées à partir de ce second convertisseur, et en alternance
   - à raccorder les charges électriques auxiliaires uniquement au premier convertisseur pour que ces charges soient alimentées à partir du premier convertisseur,
- un détecteur de défaillance du second convertisseur et une unité de manoeuvre de l'ensemble de contacteurs aptes à déclencher automatiquement le basculement du raccordement des charges électriques auxiliaires au second convertisseur vers le raccordement des charges électriques auxiliaires au premier convertisseur en réponse à la détection d'une défaillance du second convertisseur.

L'invention sera mieux comprise avec la lecture de la description qui va suivre donnée uniquement à titre d'exemple non limitatif et faite en se référant aux dessins sur lesquels :
- la figure 1 est une illustration schématique de l'architecture d'un véhicule ferroviaire,
- la figure 2 est une illustration schématique de l'architecture d'un climatiseur installé dans le véhicule ferroviaire de la figure 1,
- la figure 3 est une illustration schématique d'une unité d'alimentation installée dans le véhicule ferroviaire de la figure 1, et
- la figure 4 est un organigramme d'un procédé d'alimentation des climatiseurs du véhicule ferroviaire de la figure 1.

Dans la suite de cette description, les caractéristiques et fonctions bien connues de l'homme du métier ne sont pas décrites en détail.

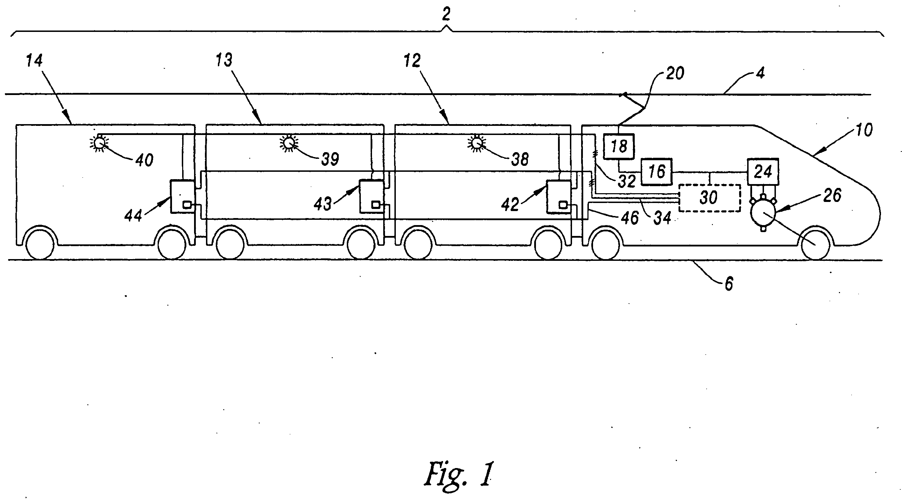

La figure 1 représente un véhicule ferroviaire 2 tel qu'un train. Ce véhicule 2 est alimenté en tension monophasée alternative par l'intermédiaire d'une caténaire 4 et circule sur des rails 6.

Le véhicule 2 comprend une locomotive 10 et plusieurs voitures 12 à 14. Ces voitures sont, par exemple, des voitures destinées à transporter des passagers.

La locomotive 10 comporte un transformateur 16 raccordé, successivement par l'intermédiaire d'un disjoncteur 18 puis d'un pantographe 20 à la caténaire 4. La tension monophasée alternative de la caténaire 4 est supérieure à 5 000 Vac et, par exemple, égal à 25 000 Vac. Le transformateur 16 délivre en sortie une tension alternative monophasée U_{ac}. La tension U_{ac} est utilisée par un dispositif 24 pour alimenter des moteurs 26 de traction de la locomotive 10 (sur la figure 1 seul un moteur 26 est représenté).

Le véhicule 2 est équipé d'un système d'alimentation de charges auxiliaires et de climatiseurs. Plus précisément, la tension U_{ac} est également utilisée par une unité d'alimentation 30 de charges électriques auxiliaires et de climatiseurs du véhicule 2. A cet effet, l'unité 30 est raccordée à deux réseaux filaires 32 et 34 de distribution d'énergie électrique dans les différentes voitures du train. Les réseaux 32 et 34 délivrent respectivement des puissances électriques P₁ et P₂ aux équipements électriques qui y sont raccordés. Dans ce mode de réalisation les tensions triphasées V₁ et V₂ sur les réseaux 32 et 34 sont comprises entre 50 Vac et 450 Vac. La tension V₁ est constante et égale à 400 Vac, par exemple.

Les climatiseurs peuvent servir à refroidir et/ou déshumidifier l'air des voitures 12 à 14.

Les charges auxiliaires installées dans le véhicule 2 requièrent, pour la plupart, une tension triphasée ayant une amplitude et une fréquence fixes. Ces charges auxiliaires sont, par exemple, un compresseur d'air comprimé du véhicule, des phares du véhicule 2, des dispositifs d'éclairage de chacune des voitures 12 à 14, des ventilateurs ou autres. Pour simplifier la figure 1, seules des ampoules 38 à 40 ont été représentées pour illustrer un exemple de charge auxiliaire nécessitant une tension et une fréquence fixes. Les ampoules 38 à 40 sont chacune placées dans une voiture respective et raccordées au réseau 32. Les ampoules 38 à 40 consomment systématiquement la puissance P₁.

Chaque voiture comporte également un climatiseur 42 à 44. Dans ce mode de réalisation, les climatiseurs 42 à 44 sont raccordés à la fois aux réseaux 32 et 34.

Chaque climatiseur 42 à 44 est également raccordé à un réseau 46 de transmission d'informations reliant l'unité 30 à chacun des climatiseurs. Ici, ce réseau 46 est un réseau bi-directionnel de transmission d'informations embarqué dans le véhicule 2.

Dans la suite de cette description, on suppose que les climatiseurs sont tous identiques.

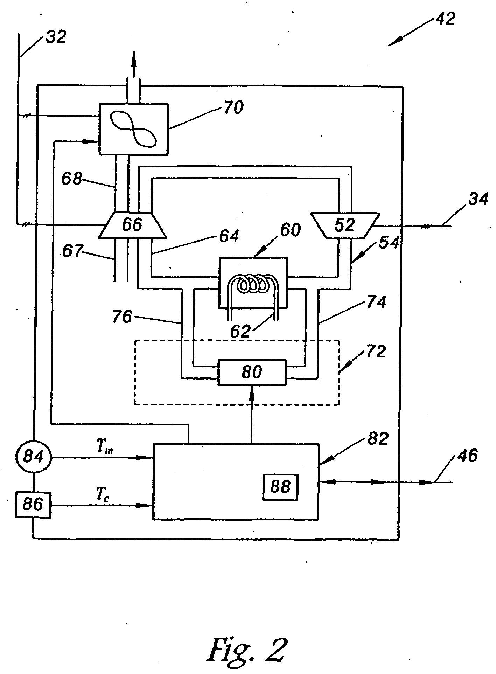

A titre d'illustration, la figure 2 représente plus en détail l'architecture du climatiseur 42.

Le climatiseur 42 comprend un tube 50 d'entrée d'un fluide réfrigérant à l'intérieur d'un compresseur 52. Le compresseur 52 est raccordé électriquement au réseau 34 pour être alimenté en tension triphasée. Ce compresseur 52 absorbe systématiquement sa puissance électrique maximale sur le réseau 34. Le compresseur d'un climatiseur consomme généralement, à lui tout seul, plus de 50 % et, typiquement, plus de 80 % de la puissance électrique totale nécessaire au fonctionnement du climatiseur.

Le fluide réfrigérant compressé par le compresseur 52 est ensuite injecté dans un tube 54. Suite à l'opération de compression, la température du fluide dans le tube 54 est supérieure à celle du fluide dans le tube 50.

Un échangeur thermique ou condenseur 60 est raccordé à une extrémité du tube 54. Ce condenseur est destiné à abaisser la température du fluide comprimé. Par exemple, le condenseur 60 est refroidi par de l'air. Le fluide comprimé en contact avec les parois du condenseur se refroidit et se condense.

Le fluide comprimé refroidi par le condenseur 60 est injecté dans un tube de sortie 64 pour être délivré à un évaporateur 66. Entre le condenseur et l'évaporateur, le fluide est détendu dans un détendeur. L'évaporateur 66 refroidit l'air ambiant mélangé à de l'air extérieur capté par l'intermédiaire d'un tube 67. L'air ambiant refroidi est injecté par l'intermédiaire d'un tube 68 vers un ventilateur 70 qui expulse l'air froid à l'intérieur de la voiture.

Le fluide réfrigérant utilisé par l'évaporateur 66 pour refroidir l'air ambiant est ensuite renvoyé dans le tube 50 afin d'être recyclé.

Les moyens de déshumidification de l'air qui font éventuellement partie de chaque climatiseur sont connus en soi et ne sont donc pas décrits.

A l'exception du compresseur 52, les autres équipements électriques du climatiseur 42, tels qu'un ventilateur de l'évaporateur 66 ou le ventilateur 70 du condenseurs, sont raccordés électriquement au réseau 32, par exemple.

Le climatiseur 42 comprend également un mécanisme 72 d'ajustement de la température de l'air froid expulsé pour une tension triphasée constante alimentant le compresseur 52. Le mécanisme 72 est, par exemple, un mécanisme de dérivation du fluide chaud connu sous le terme anglais de « hot gas bypass ». Ce mécanisme 72 est raccordé fluidiquement, d'un côté, au tube 54 par l'intermédiaire d'un tube 74 et, de l'autre côté, au tube 64 par l'intermédiaire d'un tube 76 sans passer par l'intermédiaire du condenseur 60. Une valve commandable 80 est fluidiquement raccordée entre les tubes 74 et 76 de manière à contrôler le débit de fluide envoyé directement du tube 54 au tube 50 sans passer par le condenseur 60 .

Le climatiseur 42 comprend également une unité locale 82 de pilotage du climatiseur. Cette unité 82 est raccordée :
- à un capteur 84 de la température ambiante Tₘ, situé à l'intérieur de la voiture 12 par exemple,
- à une unité 86 de détermination d'une consigne de température T_{c},
- au mécanisme 72 d'ajustement de la température, et
- au réseau 46.

Ici on considére que le capteur 84 et l'unité 86 font partie du climatiseur 42.

L'unité 86 est par exemple une interface homme-machine telle qu'un clavier permettant d'acquérir une valeur pour la consigne T_{c}. L'unité 86 peut également déterminer automatiquement la consigne T_{c} en fonction d'une mesure de la température extérieure à la voiture.

L'unité 82 est apte à piloter la valve 80 en fonction de la température Tₘ, de la consigne T_{c} et de la tension triphasée disponible sur le réseau 34.

L'unité 82 comporte également un module 88 de calcul d'un paramètre de réglage de la tension triphasée alimentant le compresseur 52. Ce paramètre indique la tension triphasée requise sur le réseau 34 pour que le compresseur 52 puisse absorber une puissance électrique minimale Pₘᵢₙ₋ᵢ nécessaire pour maintenir la température ambiante à l'intérieur de la voiture proche de la consigne T_{c}. Ici, ce paramètre de réglage est une consigne de fréquence fₘᵢₙ₋ᵢ pour la tension triphasée alimentant le compresseur 52. L'unité 82 est également apte à envoyer sur le réseau 46 une demande de puissance électrique indiquant la puissance électrique requise par son compresseur 52. A cet effet, la demande envoyée contient la fréquence fₘᵢₙ₋ᵢ correspondant à la puissance électrique Pₘᵢₙ₋ᵢ.

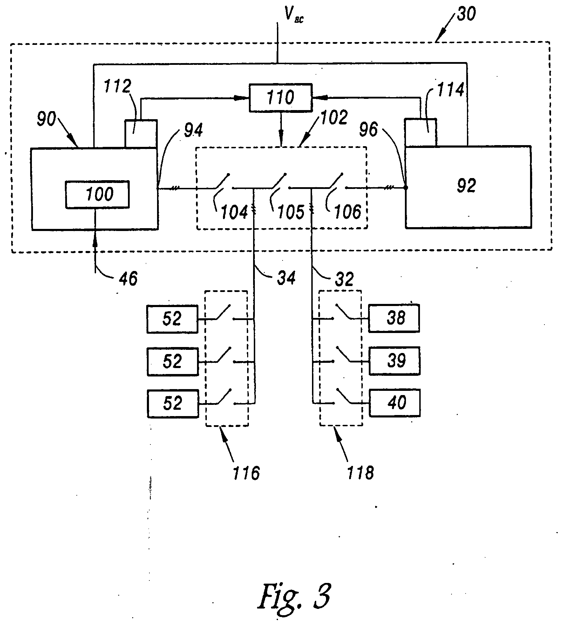

La figure 3 représente plus en détail l'unité d'alimentation 30.

L'unité 30 comprend deux convertisseurs 90 et 92 alimentés chacun par la tension monophasée U_{ac}. Chacun de ces convertisseurs est apte à convertir la tension U_{ac} en la tension triphasée V_{ac} délivrée par l'intermédiaire, respectivement, de sorties 94 et 96 de tension triphasée.

Le convertisseur 92 est, par exemple, un convertisseur délivrant une tension triphasée à amplitude et fréquence fixes.

Au contraire, le convertisseur 90 est un convertisseur apte à faire varier la tension triphasée délivrée sur la sortie 94 pour que la puissance électrique P₂ absorbée par les climatiseurs corresponde à leur demande. Ici, le convertisseur 90 est apte à faire varier la puissance électrique P₂ absorbée sur le réseau 34 en faisant varier à la fois l'amplitude et la fréquence et la tension triphasée délivrée. De préférence, la tension triphasée est modifiée de manière à préserver un rapport constant entre la tension et la fréquence.

A cet effet, le convertisseur 90 comporte un module 100 de réglage de l'amplitude et de la fréquence de la tension triphasée disponible sur la sortie 94. Ici, ce module 100 est raccordé au réseau 46 de manière à recevoir les demandes de puissance électrique et, plus précisément, les fréquences fₘᵢₘ₋ᵢ envoyées par chacun des climatiseurs 42 à 44. Typiquement, le module 100 est un module logiciel.

Dans ce mode de réalisation, la puissance maximale que peut délivrer chacun des convertisseurs 90 et 92 est suffisante pour permettre l'alimentation par un seul de ces convertisseurs de charges prioritaires. Les charges prioritaires sont, par exemple, composées de la moitié des compresseurs 52 et de la moitié des charges auxiliaires.

Les sorties 94 et 96 sont raccordées électriquement aux réseaux 34 et 32 par l'intermédiaire d'un ensemble 102 de contacteurs.

A titre d'illustration, cet ensemble 102 comporte trois contacteurs 104 à 106.

Le contacteur 104 est apte à connecter la sortie 94 au réseau 34 et, en alternance, à isoler électriquement la sortie 94 du réseau 34.

Le contacteur 105 est apte à connecter électriquement, l'un à l'autre, les réseaux 32 et 34 et, en alternance, à isoler électriquement le réseau 32 du réseau 34.

Le contacteur 106 est apte à connecter la sortie 96 au réseau 32 et, en alternance, à isoler électriquement la sortie 96 du réseau 32.

Pour simplifier la figure 3, les contacteurs 104 à 106 sont représentés en utilisant le symbole d'un contacteur monophasé. Il s'agit cependant de contacteurs triphasés aptes à connecter et, en alternance, à déconnecter les conducteurs correspondant à chacune des phases.

L'unité 30 comprend également une unité 110 de manoeuvre des contacteurs de l'ensemble 102. L'unité 110 est raccordée à deux détecteurs 112 et 114 de défaillance, respectivement, des convertisseurs 90 et 92. L'unité 110 est apte à commander la commutation des contacteurs 104 à 106 en fonction des indications de défaillance délivrées par les détecteurs 112 et 114.

Sur la figure 3, deux ensembles 116 et 118 de contacteurs commandables de délestage ont également été représentés. Les contacteurs de l'ensemble 116 permettent d'isoler électriquement et sélectivement un ou plusieurs des compresseurs 52 du réseau 34. De façon similaire, les contacteurs de l'ensemble 118 sont aptes à isoler électriquement et sélectivement une ou plusieurs des charges auxiliaires du réseau 32.

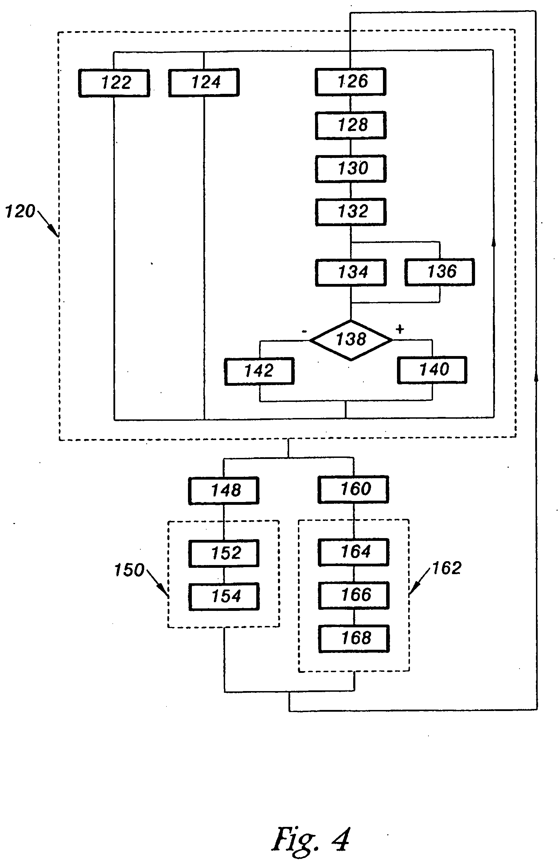

Le fonctionnement du véhicule 2 va maintenant être décrit en regard du procédé de la figure 4.

Initialement, lorsque les convertisseurs 90 et 92 fonctionnent normalement, le véhicule 2 fonctionne dans un mode 120 de fonctionnement normal. Lors de l'entrée dans ce mode, lors d'une étape 122, l'unité de manoeuvre commande la fermeture des interrupteurs 104 et 106 et l'ouverture de l'interrupteur 105. Ainsi, la sortie 94 est uniquement raccordée au réseau 34, la sortie 96 est uniquement raccordée au réseau 32 et les réseaux 32 et 34 sont électriquement isolées l'un de l'autre.

On remarque donc qu'en fonctionnement normal, tous les compresseurs 52 du véhicule 2 sont alimentés à partir du convertisseur 90 tandis que toutes charges auxiliaires, autres que les compresseurs 52, sont alimentées à partir du convertisseur 92. De plus, dans le mode 120, le convertisseur 90 est exclusivement utilisé pour alimenter des compresseurs tandis que le convertisseur 92 est exclusivement utilisé pour alimenter les charges auxiliaires autres que les compresseurs.

En parallèle, lors d'une étape 124, le convertisseur 92 délivre une tension triphasée ayant une amplitude et une fréquence constantes sur le réseau 32. Ceci correspond à une puissance électrique P₁ délivrée sur le réseau 32.

Egalement en parallèle, lors d'une étape 126, chaque capteur 84 installé dans une voiture mesure la température Tₘ. Eventuellement, lors de l'étape 126, l'unité 86 détermine une nouvelle consigne T_{c} de température pour une voiture donnée afin de rafraîchir l'ancienne consigne T_{c} mémorisée.

Ensuite, lors d'une étape 128, l'unité 82 de chaque climatiseur calcule le paramètre de réglage fₘᵢₙ₋ᵢ correspondant à la puissance Pₘᵢₙ₋ᵢ nécessaire à son compresseur 52 pour abaisser la température ambiante à l'intérieur de la voiture jusqu'à la consigne T_{c} de température. Par exemple ce calcul est fonction uniquement de la température mesurée Tₘ et de la consigne T_{c}. Plus précisément, l'unité 82 établit la fréquence fₘᵢₙ₋ᵢ que doit avoir la tension d'alimentation sur le réseau 34 pour que la puissance électrique absorbée par son compresseur sur ce réseau soit égale à la puissance Pₘᵢₙ₋ᵢ. Une fois l'étape 128 achevée, lors d'une étape 130, le module 88 de chaque climatiseur envoie sur le réseau 46 une demande de puissance électrique au module de réglage 100 contenant la fréquence fₘᵢₙ₋ᵢ. Cette demande de puissance électrique indique au module 100 quelle est la puissance électrique requise par le compresseur de ce climatiseur pour maintenir la température de l'air à l'intérieur de la voiture proche de la consigne T_{c}. En effet, ici la fréquence fₘᵢₙ₋ᵢ est utilisée pour indiquer la puissance électrique requise par le compresseur 52.

Le module 100 reçoit, par le réseau 46, les informations relatives aux demandes de puissance et, en réponse, lors d'une étape 132, ce module sélectionne la fréquence fₘᵢₙ₋ᵢ reçue la plus grande et règle la fréquence de la tension triphasée V_{ac} pour que celle-ci soit égale à la plus grande des fréquences fₘᵢₙ₋ᵢ reçues. Lors de l'étape 132, le module 100 adapte également la tension proportionnellement à la plus grande des fréquences fₘᵢₙ₋ᵢ reçue de manière à conserver constant le rapport entre la tension et la fréquence délivrée sur le réseau 34.

Ensuite, lors d'une étape 134, le convertisseur 90 fournit, sur la sortie 94, la tension triphasée correspondant au réglage effectué lors de l'étape 132. Cette tension triphasée correspond à une puissance électrique P₂ consommée ou absorbée par les compresseurs. Par la suite, la fréquence de la tension triphasée sur le réseau 34 est notée f₂.

En parallèle à l'étape 134, lors d'une étape 136, le module 100 transmet également la valeur de la fréquence f₂ à chacun des climatiseurs 42 à 44 par l'intermédiaire du réseau 46.

En réponse à la réception de la fréquence f₂ par l'intermédiaire du réseau 46, lors d'une étape 138, chaque unité 82 de climatiseur détermine si la puissance absorbée à partir du réseau 34 est supérieure ou égale à la puissance Pₘᵢₙ₋ᵢ calculée lors de l'étape 128. Par exemple, lors de l'étape 138, l'unité 82 compare la fréquence fₘᵢₙ₋ᵢ qu'elle a calculée lors de l'étape 128 à la fréquence f₂ disponible.

Si la fréquence f₂ disponible est égale à la fréquence fₘᵢₙ₋ᵢ précédemment calculée lors de l'étape 128, alors l'unité 82 commande, lors d'une étape 140, la fermeture totale de la valve 80 afin que le rendement énergétique du climatiseur soit maximum. Dans cet état, le fluide injecté dans le tube 54 ne peut pas atteindre le tube 64 sans passer par l'intermédiaire du condenseur 60.

Dans le cas contraire, c'est-à-dire si la puissance P₂ absorbée est supérieure à la puissance Pₘᵢₘ₋ᵢ que l'unité 82 a calculée lors de l'étape 128, alors, lors d'une étape 142, l'unité 82 commande l'ouverture de la valve 80 en fonction à la fois de la température mesurée Tₘ, de la consigne T_{c} de température pour l'intérieur de la voiture dans lequel ce climatiseur est installé et de caractéristique de la tension triphasée disponible sur le réseau 34. Par exemple, la caractéristique de la tension triphasée prise en compte par l'unité 82 et la fréquence f₂. Grâce à cela, le climatiseur peut générer un air froid ayant une température inférieure à celle des autres climatiseurs, alors que la puissance électrique absorbée par son compresseur est la même que celle absorbée par les compresseurs des autres climatiseurs.

Tant qu'aucun des convertisseurs n'est défaillant, les étapes 122 à 140 sont réitérées.

Si lors d'une étape 148, le détecteur 112 détecte que le convertisseur 90 est défaillant, alors le véhicule sort du mode de fonctionnement normal et rentre dans un premier mode 150 de fonctionnement dégradé. Lors de l'entrée dans ce premier mode de fonctionnement dégradé, lors d'une étape 152, l'unité 110 commande l'ouverture du contacteur 104 et la fermeture des contacteurs 105 et 106. Ainsi, à l'issue de l'étape 152, les réseaux 34 et 32 sont simultanément électriquement connectés à la sortie 96 du convertisseur 92 et électriquement isolé du convertisseur 90.

Eventuellement, en parallèle de l'étape 152, les contacteurs des ensembles 116 et 118 sont commandés de manière à raccorder électriquement uniquement la moitié des compresseurs 52 au réseau 34 et uniquement la moitié des charges auxiliaires au réseau 32. De préférence, les compresseurs et les charges auxiliaires raccordés aux réseaux 32 ou 34 sont ceux considérés comme indispensables au fonctionnement du véhicule 2.

Ensuite, lors d'une étape 154, le convertisseur 92 délivre sur sa sortie 96 une tension triphasée ayant une amplitude et une fréquence fixes quelles que soient les demandes de puissance électrique envoyées par les climatiseurs.

Ainsi, le premier mode de fonctionnement dégradé permet de continuer à alimenter une partie des compresseurs 52 même si le convertisseur 90 est défaillant.

Si, lors d'une étape 160, le détecteur 114 détecte une défaillance du convertisseur 92, alors le mode de fonctionnement normal est interrompu et le procédé se poursuit par un second mode 162 de fonctionnement dégradé.

Au début du mode 162, l'unité 110 commande, lors d'une étape 164, l'ouverture du contacteur 106 et la fermeture des contacteurs 104 et 105. Ainsi, à l'issue de l'étape 164, les réseaux 32 et 34 sont électriquement raccordés à la sortie 94 et électriquement isolés de la sortie 96.

Simultanément, les ensembles 116 et 118 de contacteurs sont commandés pour raccorder uniquement la moitié des compresseurs au réseau 34 et uniquement la moitié des charges auxiliaires au réseau 32.

Ensuite, lors d'une étape 166, l'unité 110 agit sur le convertisseur 90 pour que celui-ci délivre une tension triphasée ayant une amplitude et une fréquence fixes sur la sortie 94 quelles que soient les demandes de puissance électrique des climatiseurs. Cette tension triphasée est identique à la tension triphasée qu'aurait délivré le convertisseur 92.

Ensuite, lors d'une étape 168, le convertisseur 90 délivre la tension triphasée correspondant au réglage de l'étape 166 à la fois sur les réseaux 32 et 34. Ainsi, ce second mode de fonctionnement dégradé permet de continuer à alimenter une partie des charges auxiliaires alors que le convertisseur 92 est défaillant.

Ici, par convertisseur défaillant, on entend un convertisseur qui n'est plus apte à délivrer la puissance électrique requise sur sa sortie triphasée.

En variante, le véhicule 2 est adapté pour être raccordé à une caténaire distribuant une tension continue. Dans cette variante, typiquement, le transformateur 16 est supprimé.

Pour un véhicule ferroviaire ayant un grand nombre de voitures, il peut être nécessaire d'utiliser plusieurs unités d'alimentation telles que l'unité 30. Dans ces conditions, l'unité 30 et les réseaux d'alimentation 32 et 34 sont dupliqués en autant de fois que nécessaires pour alimenter le climatiseur et les charges auxiliaires de chacune des voitures.

Les différents modes de réalisation du véhicule 2 décrit ici présentent les avantages suivants :
- l'ensemble 102 de contacteurs permet, en cas de défaillance du convertisseur 90 d'alimenter les compresseurs à partir du convertisseur 92 et permet également en cas de défaillance du convertisseur 92 d'alimenter les charges auxiliaires à partir du convertisseur 90 ;
- les ensembles 116 et 118 de contacteurs permettent d'éviter que chaque convertisseur 90, 92 soit dimensionné pour alimenter à la fois les compresseurs 52 et toutes les charges auxiliaires ;
- les détecteurs de défaillance et l'unité de manoeuvre permettent de commander automatiquement le basculement du mode de fonctionnement normal vers un mode de fonctionnement dégradé ;
- régler la tension et la fréquence en sortie du convertisseur 90 de telle sorte que celles-ci permettent au climatiseur qui a besoin de plus de puissance d'absorber cette puissance pour réguler la température autour de la consigne de température T_{c} ;
- le mécanisme d'ajustement incorporé dans chacun des climatiseurs permet quant à lui d'ajuster individuellement la température dans chaque voiture alors que la puissance électrique reçue par chaque compresseur est identique, en particulier en mode dégradé.

## Revendications

1. Système d'alimentation pour véhicule ferroviaire comportant :
- une unité d'alimentation (30) comportant des premier et second convertisseurs électriques (90, 92) propres à transformer chacun une tension électrique monophasée ou continue reçue par l'intermédiaire d'une caténaire (4) en de la tension électrique triphasée délivrée sur, respectivement, un premier et un second réseaux (32, 34) d'alimentation triphasée embarqués propres chacun à distribuer de l'énergie électrique dans plusieurs voitures du véhicule ferroviaire, les premier et second réseaux étant électriquement isolables l'un de l'autre,
- plusieurs climatiseurs (42 à 44) installés dans plusieurs voitures respectives, chaque climatiseur comportant au moins un compresseur (52) afin de produire de l'air froid expulsé à l'intérieur de la voiture, ce compresseur étant raccordé électriquement au premier réseau pour être alimenté en tension triphasée par le premier convertisseur,
- des charges électriques auxiliaires (38, 40), autres que les compresseurs, raccordés électriquement au second réseau d'alimentation pour être alimentées en tension triphasée par le second convertisseur :
- le premier convertisseur (90) est apte à recevoir des informations, transmises sur un réseau (46) de transmission d'informations entre l'unité d'alimentation (30) et les climatiseurs (42 à 44), et à déduire de ces informations la demande de puissance électrique de chaque climatiseur, cette demande indiquant la puissance électrique requise par le compresseur de ce climatiseur pour refroidir et/ou déshumidifier l'air à l'intérieur de la voiture dans laquelle il est installé, et
- le premier convertisseur comporte un module (100) de réglage de l'amplitude et/ou de la fréquence de la tension triphasée délivrée sur le premier réseau d'alimentation, en fonction des demandes de puissance électrique envoyées par chaque climatiseur, pour que, dès que possible, le compresseur ayant besoin d'absorber la puissance électrique la plus importante soit en mesure de l'absorber,
le système comportant :
- un capteur (84) d'une température ambiante à l'intérieur de chaque voiture où est installé un climatiseur, et
- un module (88) de calcul de chaque climatiseur propre à calculer un paramètre de réglage de la tension triphasée d'alimentation de ce climatiseur en fonction de la température mesurée à l'intérieur de la voiture où est installé ce climatiseur et d'une consigne de température à atteindre, et à envoyer sur le réseau (46) de transmission d'informations, une demande de puissance au module (100) de réglage, contenant le paramètre de réglage, le module (100) de réglage étant propre à sélectionner la fréquence (fₘᵢₙ₋ᵢ) la plus grande parmi les fréquences des demandes de puissance reçues, et à régler la fréquence de la tension triphasée (V_{ac}) pour que celle-ci soit égale à la fréquence la plus grande et à transmettre la valeur de la fréquence la plus grande sélectionnée à chacun des climatiseurs par l'intermédiaire du réseau (46),
chaque climatiseur comprenant un compresseur (52), un condenseur (60) et un évaporateur (66),
le système étant **caractérisé en ce que** :
le paramètre de réglage indique la tension triphasée requise sur le premier réseau pour que le compresseur de ce climatiseur puisse absorber une puissance électrique minimale (Pₘᵢₙ₋ᵢ) nécessaire pour maintenir la température mesurée à l'intérieur de la voiture proche de la consigne de température (T_{c}), le paramètre de réglage étant une consigne de fréquence (fₘᵢₙ₋ᵢ) pour la tension triphasée alimentant ce compresseur,
un fluide réfrigérant compressé par le compresseur étant injecté dans un premier tube (54), le condenseur (60) étant raccordé à une extrémité du tube (54), et le fluide comprimé refroidi par le condenseur étant injecté dans un second tube de sortie (64) pour être délivré à l'évaporateur,
chaque climatiseur comprenant, en outre
- un mécanisme (72) d'ajustement de la température de l'air froid expulsé pour une même tension triphasée délivrée à son compresseur, qui est un mécanisme de dérivation du fluide chaud comprenant une valve commandable (80) en parallèle d'un condenseur (60), ce mécanisme (72) étant raccordé fluidiquement, d'un côté, au premier tube (54) par l'intermédiaire d'un tube (74) et, de l'autre côté, au second tube (64) par l'intermédiaire d'un tube (76) sans passer par l'intermédiaire du condenseur (60),
et
- une unité de pilotage (82) de ce mécanisme (72) en fonction de l'amplitude et/ou de la fréquence de la tension triphasée délivrée à son compresseur, de la température mesurée à l'intérieur de la voiture où est installé ce climatiseur et de la consigne de température,
l'unité de pilotage (82) étant propre à comparer la consigne de fréquence à la fréquence la plus grande et :
si la fréquence la plus grande est égale à la consigne de fréquence, alors l'unité de pilotage (82) est propre à commander la fermeture totale de la valve commandable (80) afin que le rendement énergétique du climatiseur soit maximum,
dans le cas contraire, l'unité de pilotage (82) commande l'ouverture de la valve commandable (80) en fonction à la fois de la température mesurée (Tₘ) de la consigne de température (T_{c}) pour l'intérieur de la voiture dans lequel ce climatiseur est installé et de caractéristique de la tension triphasée disponible sur le premier réseau.

2. Système selon la revendication 1 dans lequel le système comporte un ensemble (102) de contacteurs commandables propre :
- à raccorder les compresseurs (52) des climatiseurs uniquement au premier convertisseur pour que ces compresseurs soient alimentés à partir de ce premier convertisseur et à raccorder les charges auxiliaires, autres que ces compresseurs, uniquement au second convertisseur pour que ces charges auxiliaires soient alimentées à partir de ce second convertisseur, et en alternance
- à raccorder les compresseurs uniquement au second convertisseur pour que ces mêmes compresseurs soient alimentés à partir de ce second convertisseur.

3. Système selon la revendication 2, dans lequel le système comporte un détecteur (12) de défaillance du premier convertisseur (90), et une unité (110) de manoeuvre de l'ensemble (102) de contacteurs apte à déclencher automatiquement un basculement du raccordement des compresseurs au premier convertisseur vers un raccordement de ces mêmes compresseurs au second convertisseur en réponse à la détection d'une défaillance du premier convertisseur.

4. Système selon l'une quelconque des revendications précédentes, dans lequel le système comporte un ensemble (102) de contacteurs commandables propre :
- à raccorder les charges électriques auxiliaires, autres que les compresseurs, uniquement au second convertisseur pour que ces charges soient alimentées à partir de ce second convertisseur, et en alternance
- à raccorder les mêmes charges électriques auxiliaires uniquement au premier convertisseur pour que ces charges soient alimentées à partir du premier convertisseur.

5. Système selon la revendication 4, dans lequel le système comporte un détecteur (114) de défaillance du second convertisseur et une unité (110) de manoeuvre de l'ensemble de contacteurs aptes à déclencher automatiquement le basculement du raccordement des charges électriques auxiliaires au second convertisseur vers le raccordement des charges électriques auxiliaires au premier convertisseur en réponse à la détection d'une défaillance du second convertisseur.

## Patentansprüche

1. Stromversorgungssystem für ein Schienenfahrzeug, umfassend:
- eine Versorgungseinheit (30) umfassend einen ersten und einen zweiten Stromwandler (90, 92), jeder fähig, eine durch eine Fahrleitung (4) empfangene elektrische Einphasen- oder Gleichspannung umzuwandeln in eine elektrische Dreiphasenspannung, eingespeist in jeweils ein erstes und ein zweites fahrzeugeigenes Dreiphasen-Versorgungsnetz (32, 34), jedes fähig, mehrere Wagen des Schienenfahrzeugs mit elektrischer Energie zu versorgen, wobei das erste Netz und das zweite Netz elektrisch voneinander isoliert werden können,
- mehrere Klimageräte (42 bis 44), installiert in mehreren jeweiligen Wagen, wobei jedes Klimagerät wenigstens einen Kompressor (52) umfasst, um ins Wageninnere geblasene kalte Luft zu erzeugen, wobei dieser Kompressor elektrisch mit dem ersten Netz verbunden ist, um durch den ersten Wandler mit Dreiphasenspannung versorgt zu werden,
- elektrische Hilfslasten (38, 40), anders als die Kompressoren, die elektrisch mit dem zweiten Versorgungsnetz verbunden sind, um durch den zweiten Wandler mit Dreiphasenspannung versorgt zu werden,
- der erste Wandler (90) fähig ist, Daten, die über ein Datenübertragungsnetzes (46) zwischen der Versorgungseinheit (30) und den Klimageräten (42 bis 44) übertragen werden, zu empfangen und aus diesen Daten den elektrischen Leistungsbedarf jedes Klimageräts abzuleiten, wobei dieser Bedarf derjenigen elektrischen Leistung entspricht, die der Kompressor dieses Klimageräts benötigt, um die Luft im Innern des Wagens, in dem es installiert ist, zu kühlen und/oder zu entfeuchten, und
- der erste Wandler einen Modul (100) zur Regelung der Amplitude und/oder der Frequenz der auf dem ersten Versorgungsnetz gelieferten Dreiphasenspannung in Abhängigkeit von den durch jedes Klimagerät gesendeten Anforderungen von elektrischer Leistung umfasst, so dass der Kompressor mit dem höchsten Bedarf an elektrischer Leistung diese so schnell wie möglich aufnehmen kann,
wobei das System umfasst:
- einen Sensor (84) einer Umgebungstemperatur im Innern jedes Wagens, in dem ein Klimagerät installiert ist, und
- einen Modul (88) für jedes Klimagerät zur Berechnung eines Parameters zur Regelung der Dreiphasenspannung dieses Klimageräts in Abhängigkeit von der Temperatur gemessen im Innern des Wagens, wo dieses Klimagerät installiert ist, und von einem zu erreichenden Temperatursollwert, und zum Senden eines Leistungsbedarf über das Datenübertragungsnetzes (46) an das Modul (100) zur Regelung, umfassend den Parameter zur Regelung,
- bei dem der Regelungsmodul (100) fähig ist, die höchste Frequenz (fₘᵢₘ₋ᵢ) von den Frequenzen der empfangenen Leistungsbedarfe auszuwählen, und die Frequenz der Dreiphasenspannung (V_{ac}) zu regeln, so dass diese gleich der höchsten Frequenz ist, und den Wert der ausgewählten höchsten Frequenz an jedes Klimagerät über das Datenübertragungsnetz (46) zu übertragen,
wobei jedes Klimagerät einen Kompressor (52), einen Kondensator (60), und einen Verdampfer (66) umfasst,
wobei das System **dadurch gekennzeichnet ist, dass**:
der Parameter zur Regelung eine im ersten Netz benötigte Dreiphasenspannung angibt, damit der Kompressor dieses Klimageräts eine minimale elektrische Leistung (Pₘᵢₙ₋ᵢ) aufnehmen kann, die notwendig ist, um die im Innern des Wagens gemessene Temperatur nahe an dem Temperatursollwert (T_{c}) zu halten, wobei der Parameter zur Regelung ein Frequenzsollwert (fₘᵢₘ₋ᵢ) für die Dreiphasenspannung ist, die diesen Kompressor versorgt,
wobei eine Kühlfluid, das durch den Kompressor komprimiert wird, in ein erstes Rohr (54) eingespeist wird, wobei der Kondensator (60) an ein Ende des Rohrs (54) angeschlossen ist, und das durch den Kondensator gekühlte komprimierte Fluid in ein zweites Ausgangsrohr (64) eingespeist wird, um an den Verdampfer geliefert zu werden,
wobei jedes Klimagerät ferner umfasst:
- einen Mechanismus (72) zur Anpassung der für eine selbe an seinen Kompressor gelieferte Dreiphasenspannung ausgestoßenen Kaltluft, wobei der ein Ableitungsmechanismus für ein heißes Fluid ist und ein steuerbares Ventil (80) parallel zum Kondensator (60) umfasst, wobei der Mechanismus (72) fluidmäßig auf der einen Seite mit dem ersten Rohr (54) über ein Rohr (74) und auf der anderen Seite mit dem zweiten Rohr (64) über ein Rohr (76) verbunden ist, ohne über den Kondensator (60) zu verlaufen,
und
- eine Einheit (82) zur Steuerung dieses Mechanismus' in Abhängigkeit von: der Amplitude und/oder der Frequenz der an seinen Kompressor gelieferten Dreiphasenspannung, der Temperatur gemessen im Innern des Wagens, wo dieses Klimagerät installiert ist, und dem Temperatursollwert,
die Einheit (82) zur Steuerung ist eingerichtet, die Sollfrequenz mit der höchsten Frequenz zu vergleichen und:
falls die höchste Frequenz gleich der Sollfrequenz ist, ist die Einheit (82) zur Steuerung eingerichtet, eine vollständige Schließung des steuerbaren Ventils (80) zu befehlen, damit die Energieausbeute des Klimageräts maximal ist,
im entgegengesetzten Fall befiehlt die Einheit (82) zur Steuerung die Öffnung des steuerbaren Ventils (80) in Abhängigkeit gleichzeitig von der gemessenen Temperator (Tₘ), dem Temperatursollwert (T_{c}) für das Innere des Wagens, wo dieses Klimagerät installiert ist, und von einer Eigenschaft der im ersten Netz verfügbaren Dreiphasenspannung.
, wo dieses Klimagerät installiert ist, und von einem zu erreichenden,
den in dem ersten Netz in Abhängigkeit von diesem Regelungsparameter zu regeln, so dass der Kompressor mit dem höchsten Bedarf an elektrischer Leistung diese so schnell wie möglich aufnehmen kann.

2. System nach Anspruch 1, wobei das System eine Gruppe steuerbarer Schalter (102) umfasst, fähig:
- die Kompressoren (52) der Klimageräte nur mit dem ersten Wandler zu verbinden, so dass diese Kompressoren von diesem ersten Wandler versorgt werden, und die Hilfslasten, anders als diese Kompressoren, nur mit dem zweiten Wandler zu verbinden, so dass diese Hilfslasten von diesem zweiten Wandler versorgt werden, und alternierend
- die Kompressoren nur mit dem zweiten Wandler zu verbinden, damit eben diese Kompressoren von diesem zweiten Wandler versorgt werden.

3. System nach Anspruch 2, wobei das System einen Detektor (12) eines Ausfalls des ersten Wandlers (90) und eine Betätigungseinrichtung (110) der Schaltergruppe (102) umfasst, fähig, als Reaktion auf die Detektion eines Ausfalls des ersten Wandlers automatisch eine Umschaltung der Verbindung der Kompressoren mit dem ersten Wandler in eine Verbindung dieser selben Kompressoren mit dem zweiten Wandler auszulösen.

4. System nach einem der vorangehenden Ansprüche, wobei das System eine Gruppe steuerbarer Schalter (102) umfasst, fähig:
- die elektrischen Hilfslasten, anders als die Kompressoren, nur mit dem zweiten Wandler zu verbinden, so dass diese Hilfslasten nur von diesem zweiten Wandler versorgt werden, und alterierend
- dieselben elektrischen Hilfslasten nur mit dem ersten Wandler zu verbinden, damit diese Lasten von dem ersten Wandler versorgt werden.

5. System nach Anspruch 4, wobei das System einen Detektor (114) eines Ausfalls des zweiten Wandlers und eine Betätigungseinrichtung (110) der Schaltergruppe umfasst, fähig, als Reaktion auf die Detektion eines Ausfalls des zweiten Wandlers automatisch eine Umschaltung der Verbindung der elektrischen Hilfslasten mit dem zweiten Wandler in eine Verbindung der elektrischen Hilfslasten mit dem ersten Wandler auszulösen.

## Claims

1. Power supply system for a railway vehicle comprising:
- a power supply unit (30) comprising first and second electric converters (90, 92), each adapted to convert a single-phase or direct voltage received via an overhead line (4) to a three-phase voltage delivered to a first and second on board three-phase power supply network (32, 34) respectively, each adapted to distribute electric energy in several carriages of the railway vehicle, the first and second networks being electrically isolatable from each other,
- several air conditioning units (42 to 44) installed in several respective carriages, each air conditioning unit comprising at least one compressor (52) in order to produce cold air expelled into the carriage, this compressor being electrically connected to the first network, to be supplied with three-phase voltage by the first converter,
- auxiliary current loads (38, 40), other than the compressors, electrically connected to the second power supply network, to be supplied with three-phase voltage by the second converter,
- the first converter (90) is suitable for receiving information from a network (46) for transmission of information between the power supply unit (30) and the air conditioning units (42 to 44) and for deducing from this information an electric power demand of each air conditioning unit, this demand indicating the electric power required by the compressor of this air conditioning unit to cool and/or dehumidify the air inside the carriage in which it is installed, and
- the first converter comprises a module (100) for regulating the amplitude and/or frequency of the three-phase voltage delivered to the first power supply network, in accordance with the electric power demands sent by each air conditioning unit, in order that, as soon as possible, the compressor needing to draw the greatest electric power is capable of drawing it,
the power supply system comprising :
- a sensor (84) of an ambient temperature inside each carriage in which an air conditioning unit is installed, and
- a calculation module (88) for each air conditioning unit, able to calculate a three-phase voltage regulation parameter of this air conditioning unit in accordance with the temperature measured inside the carriage in which this air conditioning unit is installed and with a temperature set-point to be reached, and to send on the network (46) for transmission of information, an electric power demand to the module (100) for regulating, containing the regulation parameter, the module (100) for regulating being able to select the greatest frequency (fₘᵢₘ₋ᵢ) among the frequencies of the electric power demands received and to regulate the frequency of the three-phase voltage (V_{ac}) in order this latter be equal to the greatest frequency and to transmit the value of the greatest frequency to each of the air conditioning units through network (46),
each air conditioning unit comprises a compressor (52), a condenser (60) and a evaporator (66),
the power supply system being characterise in that:
the regulation parameter indicates the three-phase voltage required on the first network in order the compressor of this air conditioning unit to draw a minimum electric power (Pₘᵢₘ₋ᵢ) needed to maintain the measured temperature inside the carriage close to the temperature set-point (T_{c}), the regulation parameter being a frequency set-point (fₘᵢₘ₋ᵢ) for the three-phase voltage supplying this compressor,
a coolant fluid compressed by the compressor being injected into a first pipe (54), the condenser (60) being connected to one end of the pipe (54), and the compressed fluid cooled by the condenser being injected into a second output pipe (64) in order to be delivered to the evaporator,
each air conditioning unit further comprising:
- a mechanism (72) for adjustment of the temperature of the cold air expelled for the same three-phase voltage delivered to its compressor, that is a derivation mechanism of the hot fluid comprising a controllable valve (80) in parallel to a condenser (60), this mechanism (72) being fluidly connected, on one side, to the first pipe (54) through a pipe (74) and, on the other side, to the second pipe (76) without going through the condenser (60),
and
- a control unit (82) of this mechanism (72) in accordance with the amplitude and/or frequency of the three-phase voltage delivered to its compressor, with the temperature measured inside the carriage in which this air conditioning unit is installed and with the temperature set-point,
the control unit (82) being able to compare the frequency set-point to the greatest frequency and:
if the greatest frequency is equal to the frequency set-point, then the control unite (82) is able to command the full closure of the controllable valve (80) in order to maximize the energy efficiency of the air conditioning unit,
on the contrary, the control unite (82) command the opening of the controllable valve (80) according to both the temperature measured (Tm), of the temperature set-point (Tc) inside the carriage wherein this air conditioning unit is installed and of the properties of the three-phase voltage available on the first network.

2. System according to claim 1 in which the system comprises a set (102) of controllable contactors adapted to:
- connect the compressors (52) of the air conditioning units only to the first converter in order for these compressors to be supplied from this first converter and to connect the auxiliary loads, other than these compressors, only to the second converter in order for these auxiliary loads to be supplied from this second converter and alternately
- connect the compressors only to the second converter in order for these compressors to be supplied from this second converter.

3. System according to claim 2, in which the system comprises a detector (12) of failure of the first converter (90) and a unit (110) for operating the set (102) of controllable contactors suitable for automatically starting a swing of the connection of the compressors to the first converter over to a connection of these compressors to the second converter in response to the detection of a failure of the first converter.

4. System according to any one of the preceding claims, in which the system comprises a set (102) of controllable contactors adapted to:
- connect the auxiliary current loads, other than the compressors, only to the second converter in order for these loads to be supplied from this second converter and alternately
- connect these auxiliary current loads only to the first converter in order for these loads to be supplied from the first converter.

5. System according to claim 4, in which the system comprises a detector (114) of failure of the second converter and a unit (110) for operating the set of controllable contactors suitable for automatically starting the swing of the connection of the auxiliary current loads to the second converter over to the connection of the auxiliary current loads to the first converter in response to the detection of a failure of the second converter.
